# EUROPEAN PATENT SPECIFICATION

(11) **EP 2 024 794 B1**
(45) Date of publication and mention of the grant of the patent: **01.05.2013**
(21) Application number: 07873291.4
(22) Date of filing: 17.01.2007
(51) Int. Cl.: G06F 3/048, G05B 19/10

(54) **CONTROLLER USER INTERFACE**
BENUTZERSCHNITTSTELLE MIT EINER PROGRAMMIERBAREN TASTE FÜR EINE STEUERUNG
INTERFACE UTILISATEUR D'UN CONTRÔLEUR

(30) Priority: 23.01.2006 US 761163 P; 12.01.2007 US 653465
(43) Date of publication of application: 18.02.2009
(73) Proprietor: Watlow Electric Manufacturing Company, St. Louis, MO 63146 (US)
(72) Inventor: PFINGSTEN, Thomas Robert, Winona, MN 55987 (US)
(74) Representative: Knapp, Thomas
(86) International application number: PCT/US2007/001171
(87) International publication number: WO 2008/123843

(56) References cited:
- DE-A1- 10 307 756
- US-A- 5 592 057
- US-A- 5 790 437
- US-A1- 2001 048 811
- US-A1- 2003 071 792
- US-A1- 2003 234 246
- SIEMENS AG: 'S25 Bedienungsanleitung' 19 November 1999, pages U1, 1-4, - 9,20,46 Retrieved from the Internet: <URL:http://www.4phones.de/download/downloa d2.php?id=89> [retrieved on 2012-06-25]

## Description

### FIELD OF THE INVENTION

The present disclosure relates generally to controllers and, more specifically, to a user interface of a power controller.
Certain user interfaces have been made available for television remote controls and mobile handsets as provided in the document US 2003/071792 A1 and, further, in the document Siemens AG, S25 Bedienungsanleitung, November 19, 1999 (1999-11-19) pages U1, 1-4, 9, 20, 46, retrieved from the Internet: URL:http://www.4phones.de/download/download2.php?id=89

### BACKGROUND

The statements in this section merely provide background information related to the present disclosure and may not constitute prior art.

A typical controller includes a set of user-activated buttons or keys for receiving user input and a display for prompting the user to select action options offered on the current display page. However, the functions of current buttons on a controller user interface are predetermined by the manufacturer of the controller or controller user interface. In some controllers, an Original Equipment Manufacturer (OEM) or user can select a subset of an available set of parameters to be displayed on the controller display, e.g., the controller display can be user defined to only display a limited set of parameters that may be of interest or that is applicable, and to not display unwanted or unnecessary parameters. In other controllers, a data communication interface is configured for receiving a variety of administrative and control functionality to the controller, including the downloading of software and control operations and function, display control and characteristics. This can also include receiving remote user input.

In other controller systems, computer software has been developed by controller manufacturers that enable a user remotely operating the computer software to select from a predetermined list of operations and parameters. For example, some controllers are configured with an event input wherein the user can perform particular operations by opening and closing a switch or applying a DC logic signal to specialized controller input terminals. This feature has some added convenience, safety, and/or security to controller and control systems, but these systems typically require extra wiring, panel space, and a separate external button for user activation.

Examples of keys used on a controller include scrolling and selecting keys that are based on a controller mode or user interface state. The function is predefined by the manufacturer of the controller.

Profiles may be performed by the controller. Profiles include temperature or pressure profiles. The profile has a fixed format that may only allow changing of a set point, an output state or control mode. The profile and the operation of buttons are again predefined by the manufacturer of the controller. US 5 592 057 A relates to a step motor and servo motor indexer having an improved user interface wherein an input capability for programming a full range of program parameters and values is provided, yet where the user input system has few components. DE 103 07 756 A1 discloses a method for adjusting the settings of a household appliance, whereby a user selects a program and operating parameters via an operating element, whereby certain information of relevance to the user is output to a display during programming. US 2001/048811 A1 describes a remote control tankless water heater system, whereby in one embodiment, there is a key pad control system, including preset buttons which serve as a memory for storing optimal user temperatures, automatic troubleshooting, and scald protection. US 2003/234246 A1 refers to an operating device for an electrical and/or electronic apparatus that is adapted to the operating behavior of a user. The apparatus has a plurality of operating states which can be chosen or set by way of the operating device. US 5 790 437 A describes an interface for graphically programming a ramping controller coupled to and controlling an electric heater that is implemented with a microcomputer. The interface presents to the user via a display device etc.

### SUMMARY

The inventor hereof has identified the need for a controller interface that permits a user to program or redefine the functions or actions associated with operator selection of an interface control button, obviating the need for installing external buttons with associated wiring. The inventor has succeeded at designing a user programmable interface for a controller and methods that enable programming the control sequence actions associated with operator selection of a controller user interface button or key.

According to one aspect of the disclosure, an interface for a controller has a plurality of manual user input mechanisms for receiving user input, a processor, and memory. The interface includes an actuation mechanism configured for receiving an actuation by a user and a user interface module coupled to the input mechanism for receiving an indication of an actuation of the actuation mechanism by the user. The user interface module is configured to receive one or more of actions from at least one of one or more user input mechanisms and a soft key module, to store the received one or more actions, and to execute the stored one or more actions in response to receiving the actuation indication.

According to another aspect of the disclosure, a power control system has a controller and a power switching device configured for selectively providing power to a controlled device. A user interface has a plurality of user input mechanisms, a processor, memory including computer executable instructions for execution by the processor, and a user actuation device configured for receiving an actuation input from a user. The user interface includes a learn mode and an operations mode and is configured to receive a user defined action during the learn mode from one or more of the user input mechanisms and to execute the user defined action during the operations mode and in response to receiving the user actuation input.

According to yet another aspect of the disclosure, a power control system has a controller, a power switching device configured for selectively providing power to a controlled device, and a user interface. The user interface includes a plurality of user input mechanisms for receiving inputs from a user during controller operation, a processor, memory including computer executable instructions for execution by the processor, and a user actuation device configured for receiving an actuation input from a user. The user interface is configured to execute one or more stored actions in response to receiving the user actuation input. A usage projection module is configured for storing a sequence of user inputs received from the user input mechanisms during controller operation, projecting one or more next user actions as a function of the stored sequence of user inputs, and storing the projected one or more next user actions in the memory as the one or more stored actions, wherein the user interface module is configured to execute the one or more stored projected next user actions in response to receiving the user actuation input.

According to still another aspect of the disclosure, a power control system has a controller with a processor and memory including computer executable instructions for execution by the processor and configured for controlling a function of the controller for selectively providing power to a controlled device by executing a sequence of controller actions. A power switching device is configured for selectively providing power to the controlled device in response to the controller. A user interface has a processor, and memory including computer executable instructions for execution by the processor. Also included are a user actuation device configured for receiving an actuation input from a user. The user interface is configured to execute a stored defined action in response to receiving the user actuation input. A projection module is configured for storing one or more of the sequence of controller actions as executed by the controller, projecting one or more next controller actions as a function of the stored sequence of actions, and storing the projected one or more next controller actions in the memory as the one or more stored actions. The user interface module is configured to execute the one or more stored projected controller actions in response to receiving the user actuation input.

According to another aspect of the disclosure, a controller includes means for receiving a user defined action, means for storing the user defined action, means for receiving a user input for executing the stored user defined action, and means for executing the stored user defined action in response to receiving the user input.

According to yet another aspect of the disclosure, a method of operating a user interface of a process controller having a microprocessor, memory in communication with the microprocessor, and one or more input mechanisms in communication with the microprocessor and responsive to user input. The method includes receiving an action via one or more of the input mechanisms activated by a user, storing the received action in the memory, receiving an input from a user for executing the stored action, and executing the stored action in response to receiving the user input.

According to still another aspect of the disclosure, a method of operating a controller is provided where the controller is configured for selectively providing power to a controlled device by executing a sequence of controller actions and the controller has a learn mode and an operations mode. The method includes receiving a plurality of user actions from one or more input mechanisms activated by a user during the operations mode, storing the sequence of received user actions during the operations mode, receiving an input from a user for executing the stored sequence during the operations mode, and executing the stored sequence of actions in response to receiving the user input.

According to still another aspect of the disclosure, a controller has a processor and memory including computer executable instructions including predefined actions for execution by the processor for controlling the selective providing of power to a controlled device. A method of operating the controller includes storing one or more of the predefined actions as a next controller action, receiving an input from a user for executing the stored next controller action, and executing the stored next controller action in response to receiving the user input.

Further aspects of the present disclosure will be in part apparent and in part pointed out below. It should be understood that various aspects of the disclosure may be implemented individually or in combination with one another. It should also be understood that the detailed description and drawings, while indicating certain exemplary embodiments of the disclosure, are intended for purposes of illustration only.

### BRIEF DESCRIPTION OF THE DRAWINGS

FIG. 1 is a block diagram of a control system according to one embodiment of the disclosure.

FIG. 2 is a perspective view of a controller having a programmable controller user interface in one exemplary embodiment.

FIG. 3 is a front view of a controller front panel having a programmable user interface.

FIG. 4 is a flow chart of an exemplary method illustrating the programming of a controller user interface button in one embodiment.

FIG. 5 is a block diagram of a computer system that may be used to implement a method and apparatus embodying some aspects of the present disclosure.

FIG. 6 is a flowchart of a method of controlling a system according to an alternative embodiment of the disclosure.

It should be understood that throughout the drawings, corresponding reference numerals indicate like or corresponding parts and features.

### DETAILED DESCRIPTION

The following description is merely exemplary in nature and is not intended to limit the present disclosure or the disclosure's applications or uses.

According to one embodiment of the disclosure, an interface for a controller has a plurality of manual user input mechanisms for receiving user input, a processor, and memory. The interface can be any user interface and can include an interface for a process controller, a temperature controller, a power controller, a flow controller, a pressure controller, a movement controller, a limit controller, a level controller, and a velocity controller. The interface includes an actuation mechanism configured for receiving an actuation by a user and a user interface module coupled to the input mechanism for receiving an indication of an actuation of the actuation mechanism by the user. The user actuation mechanism can be any type of actuating device such as a key, a button, a dial, a slide control, a switch, a touch pad, a mouse, a joystick, a data interface, and a voice interface, by way of example. The user interface module is configured to receive one or more actions from at least one or more user input mechanisms and a soft key module, to store the received one or more actions, and to execute the stored one or more actions in response to receiving the actuation indication.

An action or defined action or function as described herein can include any type of user interface or controller activity of function and can include, but is not limited to, defining a parameter, defining a parameter value, changing a controller profile, changing a controller program term or parameter, changing a configuration, changing a type of controlled device, traversing a menu state logic, identifying a state, change the state of the controller, changing a type of sensing device, changing a controller mode, defining or changing a routine, process, or program, performing a mathematical operation, starting or stopping a clock, automatic tuning, retrieving data, storing data, starting, pausing, restarting, turning off, shutting down, reconfiguring, establishing or entering a user identification or password, and locking.

In some embodiments, the user interface module includes one or more modes of operation, such as a learn mode and an operations mode. In such embodiments, the user interface is configured to receive a user defined action, actions, sequence of actions, or plurality of sequences of actions, during the learn mode. After the learning is complete and the interface or controller are placed in the operations mode, the received action, actions, sequences or plurality of sequences are executed by user actuation of the user actuation mechanism. The action or actions can include a pause or prompt to a user or any other desired controller or user interface action or function. Additionally, where a plurality of sequences have been received and stored, the user interface module can be configured to execute a first sequence in response to receiving a first actuation indication and execute a second sequence in response to receiving a second actuation indication.

In some embodiments, the user interface module is configured to display a controller parameter or value of a controller parameter associated with at least one of the user defined actions during the operations mode. This can be a value of a then current controller operational parameter or a value of a parameter received and stored in the learn mode, by way of example. The display function can also be used during the operations mode interactively with the executing function. For example, where a user defined sequence of actions includes a pause in the sequence, the user interface module can be configured for receiving a secondary input from the user to accept, reject, or change the value of the controller parameter as displayed and then continue the sequence following the receipt of the secondary user input.

In other embodiments, the user interface module can include a test mode or validation mode for validating the user defined action, actions, sequence of actions, or plurality of sequences received during the learn mode. This test or validation mode can verify the validity of the received functions to ensure proper operation of the user interface, the controller, and the control system. The test mode can include test scripts, tables, state diagrams, algorithms, or any other form of validating that the received actions, sequence, parameters, or values are proper for controlling the user interface and/or controller.

In some embodiments, the user interface can include a usage projection module that is configured for storing a sequence of user inputs received from the user input mechanisms and projecting one or more next user actions as a function of the stored sequence of user inputs. Similarly, the user interface can include a projection module configured for storing a sequence of user interface or controller actions (such as an action of a controller application program or remote controller or control system). In this embodiment, not only are the user actions and inputs utilized in the projection of likely or desired future actions, but one or more actions that may be taken or that are taken or executed by a controller application program may be included in identifying a pattern and a projected next action. The softkey module can be coupled to the usage projection module or the projection module for receiving the projected next action as provided by the projection module. The softkey module is configured to store the projected next action as the one or more actions. The user interface module is configured to execute one or more of the projected next actions as the one or more actions in response to receiving the actuation indication.

The usage projection modules and/or the projection module can implement one or more methods and systems for the projecting of actions. This can include mining and analyzing the stored data and identifying and/or extrapolating, by known data mining and probability calculations, one or more next actions as a function of the stored data, sequence or sequences. This can include artificial intelligence estimations or knowledge learning, by way of example. In some embodiments, this can also include pattern recognition and/or mapping, as are known to those skilled in the art.

In some embodiments, a plurality of predefined processes is stored in the memory with one or more having a set of predefined parameters associated therewith. These predefined processes can be selected or included in the selected actions by the user. For example, the user interface module can be configured to present or display a list of available actions on the display. The user can select one or more of the displayed available actions by manipulating one or more user input mechanisms. The selected predetermined parameters can then be included in the executed actions.

In some embodiments, the interface or controller can be configured with a data communication interface that is adapted for receiving actions from a remote system or remote user interface. The user interface module can be configured to store the received actions and execute the stored data communication interface received actions in response to receiving the actuation indication. In some cases, the data communication interface and user interface modules are configured for receiving the one or more actions in any format that can include a ladder logic, a graphical representation, a state table or diagram, computer executable instructions, and a scripting language, by way of example.

According to another embodiment, a power control system has a controller and a power switching device configured for selectively providing power to a controlled device. A user interface has a plurality of user input mechanisms, a display, a processor, memory including computer executable instructions for execution by the processor, and a user actuation device configured for receiving an actuation input from a user. The user interface includes a learn mode and an operations mode and is configured to receive a user defined action during the learn mode from one or more of the user input mechanisms and to execute the user defined action during the operations mode and in response to receiving the user actuation input.

One or more embodiments of the disclosure are beneficial in an operating environment in which the user performs essentially the same sequence of controller operations and adjustments of the controller or set of controllers. For example, a set of controllers may be associated with a plastic extrusion processing facility having several stages operating at different temperatures with the temperature of each stage being controlled by an individual controller. The controller may be a power controller that activates the power to a heater for each process stage and monitors the temperature of each stage with a thermocouple. Each power controller may have a unique temperature set point and display both the current process temperature (from the conversion of a thermocouple reading) and the desired set-point temperature for the process stage. As different products are produced by the same three process stages (e.g., plastics extrusion), the temperature settings may require resetting for each stage, for example, as in a cool-down operation with the temperature settings decreasing with each successive stage.

In this exemplary embodiment, a user or OEM may want to program the power controller settings according to the specific product next in the production sequence. In this instance, the list of operations performed by the user is a short set of adjustments; i.e., resetting the temperature set points at each controller stage. A representative list of other routinely performed user operations may include by way of example, but is not limited to:
a) Changing the value of a parameter set point
b) Starting or stopping a process
c) Changing a profile such as a start/stop profile or a ramp/soak profile
d) Initiating an automatic tuning of the process or controller, e.g., auto-tune
e) Changing a P, I, D term or subset thereof
f) Changing a configuration of the controller, such as changing the type of coupled sensor, changing a control algorithm, changing a manufacturing process
g) Turning the controller on or off
h) Switching between automatic or manual control of the controller and/or process
Such routines typically occur when changing a processing or manufacturing machine from one process or product to another or when initiating a different test/operation.

One or more embodiments of the disclosure can permit a user or original equipment manufacturer (OEM) that incorporates a controller into a controller operating system to configure the functionality of one or more controller user interface (UI) mechanisms, such as buttons, keys, etc., as a user programmable function key or hot key associated with the user interface. This programmable controller function key can be programmed in a variety of manners, as described, by example, within this disclosure, including, but not limited to storing of user interface keying, stored user prior input actions (e.g., in the form of a user-defined macro), extrapolation of next expected user input based upon operating history, program receipt/update from a remote controller via an operational program or as received from a data communications interface. After the programmable controller function key is programmed, a future user actuation of the key results in the execution of an action or a sequence of actions, that would otherwise require user manipulation of multiple keys.

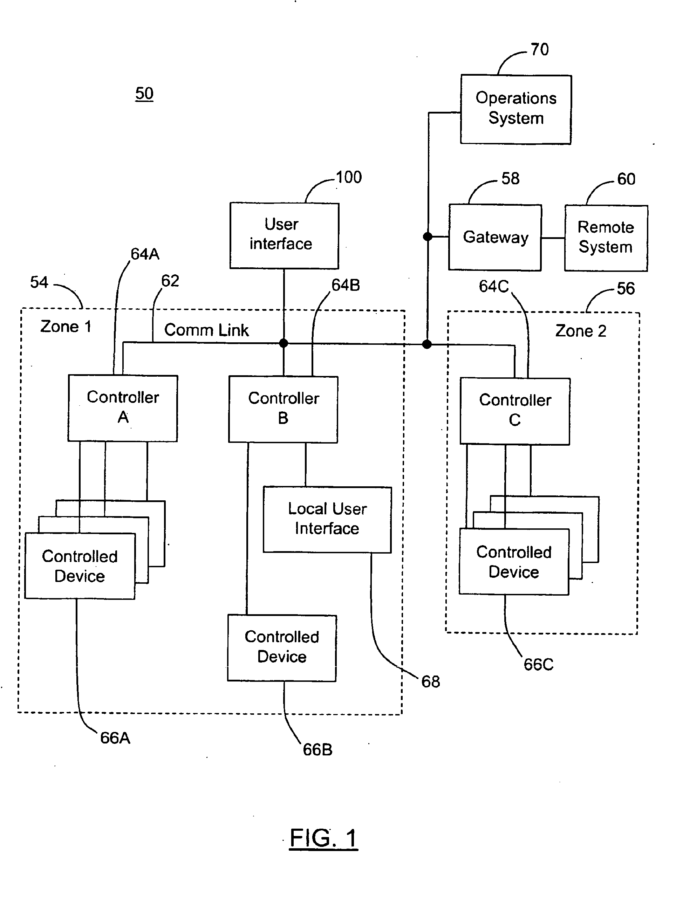

Referring to Fig. 1, an exemplary control system 50 is illustrated having two zones, zone 1 - 54 and zone 2 - 56 of control with three controllers 64A, 64B, 64C sharing a communications link 62. A user interface 100 is configured with communication protocol to communicate to each controller 64A, 64B, 64C via the shared local communications link 62. The user interface 100 can be local or remote to the controllers and can include a display and or one or more user input mechanisms such as keys, buttons, touch pad, data interface, and voice input, by way of example.

The control system 50 can be any control system providing, at least in part, power to one or more operational systems in an operating or processing environment. This can include, by way of example, a control system for a factory, a machine, a process, a device, by way of example. Examples of controlled devices 66A-C can include any type of process or system such as, but now limited to a process controller, a temperature controller such as a heater, a sensor, a flow meter, a motor, an actuator, a power controller, a flow controller, a pressure controller, a movement controller, a limit controller, a level controller, a velocity controller, or a valve.

It should be understood that in some embodiments fewer or greater number of zones and/or controllers can be implemented within the power control system 50 and still be within the scope of the disclosure. Each controller is configured with a communication interface (not shown). Controllers 64A and 64B reside in an application defined zone 1 and controller 64C resides in an application defined zone 2. As shown, controller 64A controls a plurality of control devices 64A. Controller 64B is configured to control a single control device 66B and includes a local user interface 68 to facilitate local user interaction with controller 64B. This can include turning the controller 64B on and off, starting a control routine or profile, displaying a current setting, entering or setting a controller mode or parameter, by way of example. Controller 64C supervises, manages and/or provides power to a plurality of associated controlled devices 66C.

A gateway 58 is coupled or integrated with the shared communication link 62 and thereby in communication with controllers 64A-C. The gateway 58 can provide interfacing to the communication link 62 and therefore to one or more of the controllers 64A-C by a remote system or remote user interface. For example, Fig. 1 illustrates, by way of example, a remote operational system 60 that interfaces with or through the gateway 58. The remote operational system 60 can monitor one more controller or functions or operations thereof, log data from the controllers 64A-C, provide administration to one or more controllers 64A-C and/or control one or more controllers 64A-C of the power control system 50.

In other embodiments, an operations system 70 can be communicatively coupled to the communication link 62 for directly communication to the user interface 100, the gateway 58, and/or one or more controllers 64A-C. It should be understood that any of the system 50 components, as described herein, may be physically adjacent to one or more other components, or may be positioned at a distance from one another. The operations system 70 can perform similar functions to that described above with regard to the user interface 52, the gateway 58, and/or the remote system, or includes one or more of these components therein.

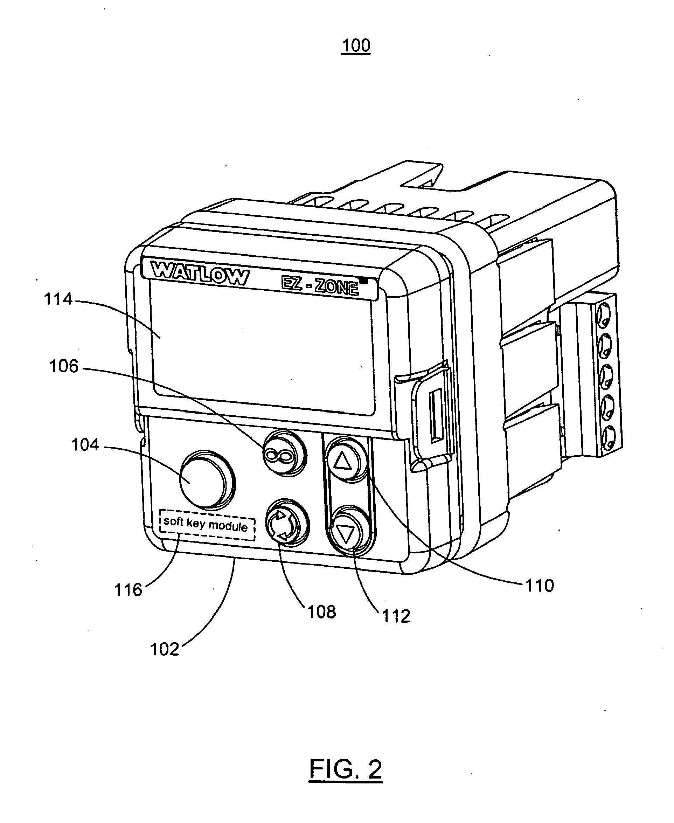

Referring now to Fig. 2, Fig. 2 is one exemplary embodiment of the disclosure. The controller user interface 100 illustrates one exemplary embodiment of the disclosure. The front panel 102 of the controller user interface 100 includes a display 114 such as an LCD display, an LED display, a seven-segment digital display or any display technology can be included for displaying the required number of digits, characters and measurement units. One or more user input mechanisms such as buttons, keys, a touch pad, a dial, by way of example, are configured for receiving an input from a user operating the controller user interface 100. In the illustrated embodiment, the user input mechanisms can include, by way of example, a user-programmable hot key button 104, an infinity key 106, a mode key 108, an up arrow button 110, and a down arrow button 112. More or fewer buttons may be utilized in a given embodiment and the illustrated embodiment is not intended to limit the scope of the disclosure. Keys 106-112 perform predefined functions that are set upon manufacture of the controller. The hot key 104 performs a user-defined function whereby a single action is performed by a single actuation. The action performed is set by the user based upon capabilities and options made available by the manufacturer of the controller.

As noted, the programming of the hot key 104 can be performed by a variety of different methods and systems. For example, referring to one embodiment of controller user interface 100, the hot key 104 may be programmed for a user defined set of actions by the user depressing multiple keys for a fixed period of time, wherein one of the keys is the hot key 104. In one embodiment, the program or learn mode for the hot key 104 can be entered by user depression of both the hot key 104 and the mode key 108 for 10 seconds, as an example. The programming mode, storing actions, displaying actions and executing actions may be performed in a soft key module 116 that may be implemented within the controller user interface 100. The soft key module 116 may also be implemented in one or more underlying controllers. Subsequent to entering the program mode, the user toggles the infinity key 106 until an actions list menu is reached. The actions list menu is displayed on display 114. Once the actions category is reached, in one embodiment, the mode key 108 is again depressed to gain access to a list of possible actions. Action choices can be displayed by successively keying/depressing the scroll buttons 110 and 112. When the desired programming action is displayed, mode button 108 is again depressed, in one embodiment, to store the desired action. If multiple actions are desired within the stored program, the action list is again scrolled to the desired choice and selected. When the programming is complete, the user again depresses both the hot key 104 and the mode key 108 for 10 seconds. The controller stores the user-defined program in non-volatile storage memory, in one embodiment, as a program number that can be later accessed and activated by the end user. In one embodiment, later program access is achieved by the user depressing the hot key 104 and the infinity key 106 simultaneously for five seconds, for example. These keys activate a stored program menu that is selected by the user depressing the mode key 108. The program is then selected by scrolling through the program list choices and selection of the program is achieved by depressing the mode key 108 for five seconds, thereby activating the controller program in one embodiment. Of course, other methods of programming a function key may also be used as are known and practiced in the art.

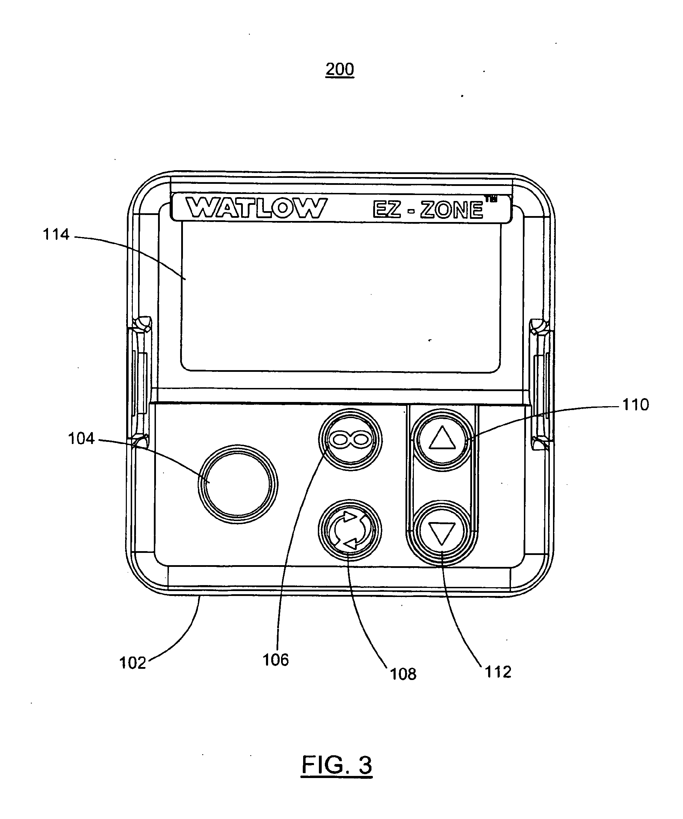

In Fig. 3, the front panel of the controller is shown with the hot key 104 acting as a start key. Should an OEM configure a controller for a specific application, the OEM may give the hot key 104 a specific label, such as "start" wherein a start-up process program could be activated by depressing the key a single time or a multiplicity of times. Alternatively, the start-up may be activated by depressing multiple user interface keys, such as the start key 104 and mode key 108 for a fixed time period, as an example.

In some embodiments, such as possibly an OEM application, the action list can be defined by an OEM. The OEM may want a particular set of actions or operations to be executed by a user keying a hot button for the OEM's particular version of the product in a specific customer application. In this case, the hot button can be preprogrammed by either manipulation of one or more keys or via a data interface or a software load to the controller. In other embodiments, the programming can be performed via ladder logic or other graphical means, or it can be based on a scripting language. An OEM may also freeze or lock out the programming function to prevent or limit the user from making further function key programming changes.

The display 114 may include temperature, zone indicator, profile activity indicator, alphanumeric code indicator and the like.

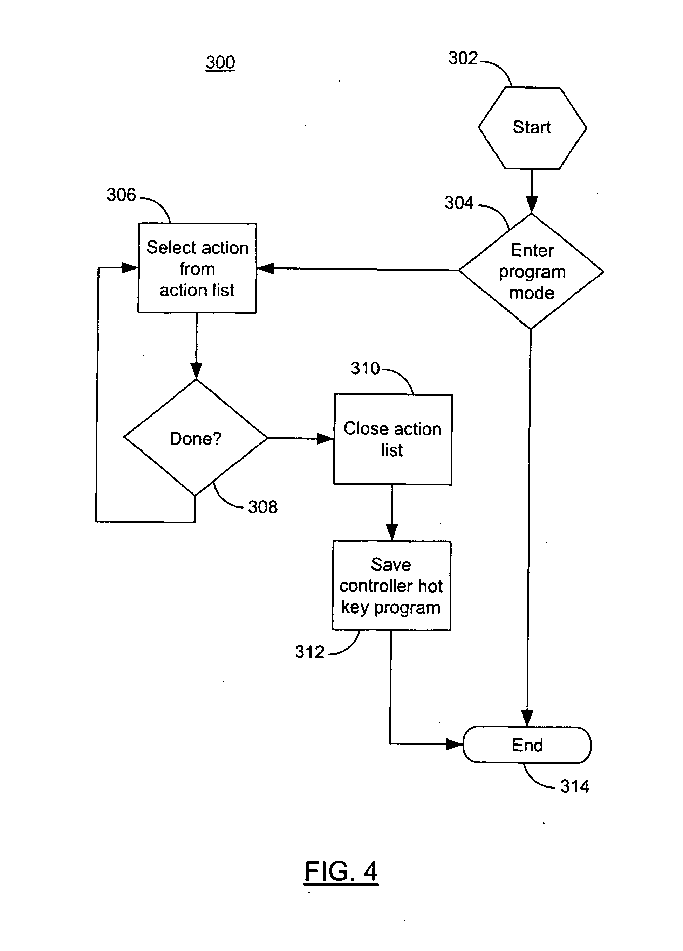

Referring now to Fig. 4, one exemplary method of hot key programming is illustrated. In step 302, the controller program mode is entered by the user depressing multiple user interface control mechanisms for a fixed time period. If the depressed key time interval condition is met, the controller enters the programming mode and proceeds to step 306. If the time interval is not met the procedure ends at step 314. In step 306, the controller displays the action category on display 114, the user depresses the mode button 108 to activate the action list, scrolls through the action list and selects the desired action by depressing the mode key 108. Should additional actions be desired the user again scrolls through the action list until the user finds the desired action and selects the next action by again depressing the mode key 108. This process is repeated until all sequenced actions have been selected. On selecting the last action, in one embodiment, the user depresses the mode key 108 twice in step 308 to close the action list in step 310. The controller saves the program in controller memory storage in step 312 with an associated program number for later access and user activation, ending the program mode process.

While one exemplary process for user hot key programming of actions is illustrated in Fig. 4, those skilled in the art will recognize that the illustrated programming procedure steps may be executed for user programming of other functions as appropriate to a specific application. For example, as described above, stored user actions or program or applications actions may also be included into the hot key programming actions. In some embodiments, the user interface or controller may include an observation and/or memory function for observing and storing the most frequent actions of the user operating the user interface (UI) mechanisms. The hot button module may add the UI action to the available action list or can prompt the user via the controller display 114 to add the action to the available action selection list. In such embodiments, a hot button functionality combines the knowledge of the controller application or operating environment with the observed frequent actions. The hot button can be programmed as a soft-key that presents to the operator an expected or most likely next action, based on a set of prior actions when the action list is displayed, thereby prioritizing actions in the action list. The actions may be based upon the particular zone that is in operation at the particular time.

According to one exemplary embodiment, a power control system including a controller, a power switching device configured for selectively providing power to a controlled device, and a user interface. The user interface includes a plurality of user input mechanisms for receiving inputs from a user during controller operation, a display, a processor, memory including computer executable instructions for execution by the processor, and a user actuation device configured for receiving an actuation input from a user. The user interface is configured to execute one or more stored actions in response to receiving the user actuation input. A usage projection module is configured for storing a sequence of user inputs received from the user input mechanisms during controller operation, projecting one or more next user actions as a function of the stored sequence of user inputs, and storing the projected one or more next user actions in the memory as the one or more stored actions, wherein the user interface module is configured to execute the one or more stored projected next user actions in response to receiving the user actuation input.

According to some exemplary embodiments, a power control system includes a controller having a processor and memory including computer executable instructions for execution by the processor and configured for controlling a function of the controller for selectively providing power to a controlled device by executing a sequence of controller actions. A power switching device is configured for selectively providing power to the controlled device in response to the controller. A user interface has a display, a processor, and memory including computer executable instructions for execution by the processor. Also included are a user actuation device configured for receiving an actuation input from a user. The user interface is configured to execute a stored defined action in response to receiving the user actuation input. A projection module is configured for storing one or more of the sequence of controller actions as executed by the controller, projecting one or more next controller actions as a function of the stored sequence of actions, and storing the projected one or more next controller actions in the memory as the one or more stored actions. The user interface module is configured to execute the one or more stored projected controller actions in response to receiving the user actuation input.

In some exemplary operational embodiments of the disclosure, a controller has a microprocessor, a display in communication with the microprocessor, memory in communication with the microprocessor, and one or more input mechanisms in communication with the microprocessor and responsive to user input. A method of operating includes receiving an action via one or more of the input mechanisms activated by a user, storing the received action in the memory, receiving an input from a user for executing the stored action, and executing the stored action in response to receiving the user input.

According to another exemplary operation of the disclosure where a controller configured for selectively providing power to a controlled device by executing a sequence of controller actions, the controller having a learn mode and an operations mode. A method of operation includes receiving a plurality of user actions from one or more input mechanisms activated by a user during the operations mode, storing the sequence of received user actions during the operations mode, receiving an input from a user for executing the stored sequence during the operations mode, and executing the stored sequence of actions in response to receiving the user input.

According to some embodiments, a method of operating a controller having a processor and memory including computer executable instructions including predefined actions for execution by the processor for controlling the selective providing of power to a controlled device. The method includes storing one or more of the predefined actions as a next controller action, receiving an input from a user for executing the stored next controller action, and executing the stored next controller action in response to receiving the user input.

This can include receiving a plurality of user actions from one or more input mechanisms activated by a user, storing the received user actions, and projecting a next controller action as a function of the received user actions and the stored predefined actions. In some embodiments, the method can include displaying the projected next controller action and the predefined actions; and receiving a selection input from the user selecting at least one of the displayed actions, storing the user selected actions, wherein executing includes executing the user selected actions.

Of course, as discussed above, the received, stored and executed action can be a sequence of actions or a plurality of sequences of actions. In the later case, the method can include receiving an input from the user that includes receiving a first user input and executing the next controller action including executing a first stored sequence in response to receiving the first user input, receiving a second user input for executing, and executing the second sequence in response to receiving the second user input. Additionally, as noted above, in some embodiment the method can include validating the sequence of next controller or user interface actions.

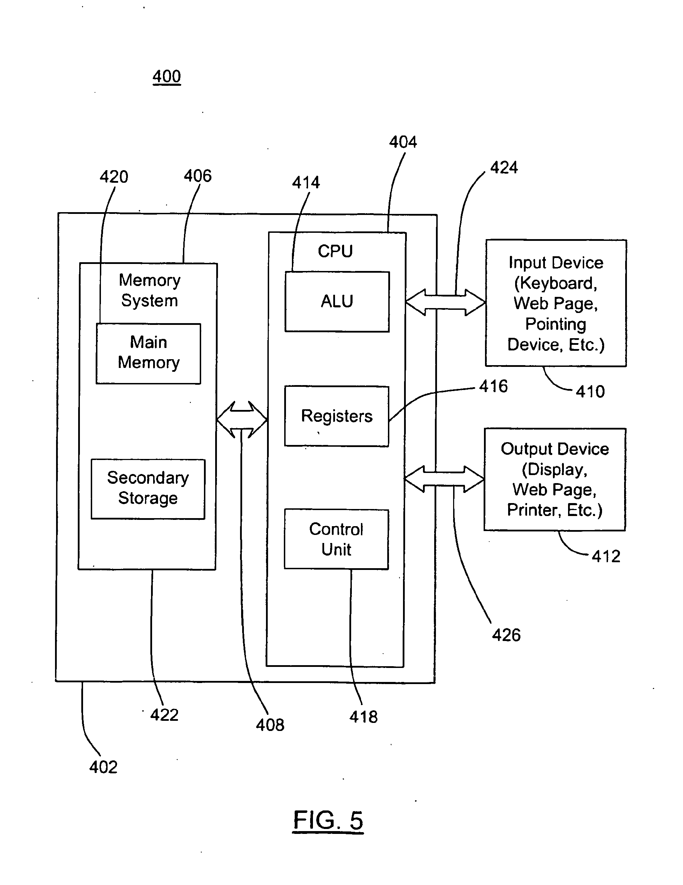

An exemplary operating environment for the user interface or some embodiments of the programmable user interface as described above, is illustrated in Fig. 5. As shown, a computer or processing system 400 can include a computer 402 that comprises at least one high speed processing unit (CPU) 404, in conjunction with a memory system 406 interconnected with at least one bus structure 408, an input device 410, and an output device 412. These elements are interconnected by at least one bus structure; two bus structures 424 and 426 are illustrated.

The illustrated CPU 404 is of familiar design and includes an arithmetic logic unit (ALU) 414 for performing computations, a collection of registers 416 for temporary storage of data and instructions, and a control unit 418 for controlling operation of the system 400. Any of a variety of processor, including at least those from Digital Equipment, Sun, MIPS, Freescale, NEC, Intel, Cyrix, AMD, HP, and Nexgen, is equally preferred for the CPU 404. The illustrated embodiment of the disclosure operates on an operating system designed to be portable to any of these processing platforms.

The memory system 406 generally includes high-speed main memory 420 in the form of a medium such as random access memory (RAM) and read only memory (ROM) semiconductor devices, and secondary storage 422 in the form of long term storage mediums such as floppy disks, hard disks, tape, CD-ROM, flash memory, etc., and other devices that store data using electrical, magnetic, optical or other recording media. The main memory 420 also can include video display memory for displaying images through a display device. Those skilled in the art will recognize that the memory system 406 can comprise a variety of alternative components having a variety of storage capacities.

The input device 410 and output device 412 are also familiar. The input device 410 can comprise a keyboard, a mousse, a physical transducer (e.g. a microphone), etc. and is interconnected to the computer 402 via an input interface 424. The output device 412 can comprise a display, a printer, a transducer (e.g., a speaker), etc., and be interconnected to the computer 402 via an output interface 426. Some devices, such as a network adapter or a modem, can be used as input and/or output devices.

As is familiar to those skilled in the art, the computer system 400 further includes an operating system and at least one application program. The operating system is the set of software which controls the computer system's operation and the allocation of resources. The application program is the set of software that performs a task desired by the user, using computer resources made available through the operating system. Both are resident in the illustrated memory system 406.

In accordance with the practices of persons skilled in the art of computer programming, the present disclosure is described below with reference to symbolic representations of operations that are performed by the computer system 400. Such operations are sometimes referred to as being computer-executed. It will be appreciated that the operations which are symbolically represented include the manipulation by the CPU 404 of electrical signals representing data bits and the maintenance of data bits at memory locations in the memory system 406, as well as other processing of signals. The memory locations where data bits are maintained are physical locations that have particular electrical, magnetic, or optical properties corresponding to the data bits. The disclosure can be implemented in a program or programs, comprising a series of instructions stored on a computer-readable medium. The computer-readable medium can be any of the devices, or a combination of the devices, described above in connection with the memory system 406.

It should be understood to those skilled in the art that some embodiments of systems or components described herein may have more or fewer computer processing system components and still be within the scope of the present disclosure.

As described herein, the controller user interface and/or controller as described by way of example herein, can, in some embodiments result in a controller for a control system that enables a user or an OEM to configure one or more controller user input mechanisms that, when activated by a user, execute an action, or one or more sequence of actions during operation, by the execution of a single or multiple controller "hot key" or programmable function keys. In some embodiments, a single user actuation or series of actuations can provide the user the ability to control the controller through a complex or repetitive set of controller actions with little effort and little room for error. As such, in some embodiment of the disclosure, repetitive and/or commonly performed operations are greatly simplified thereby improving accuracy of user input, improved quality of the controller operation, and reduced operations time.

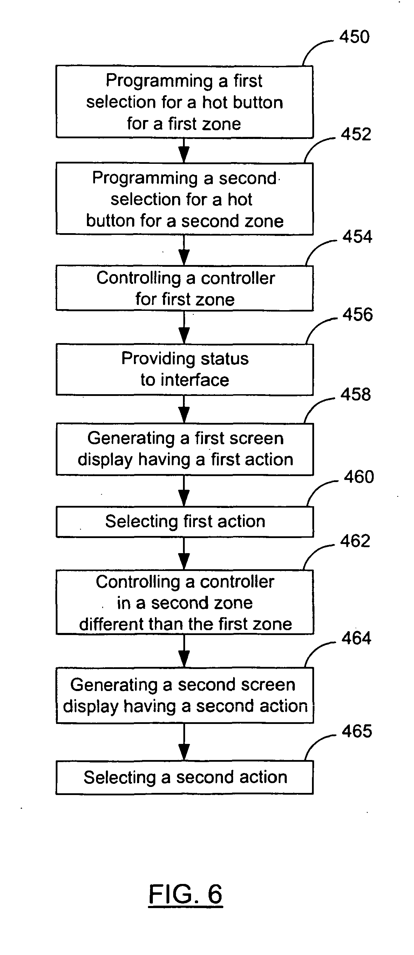

Referring now to Figure 6, a method for operating a control system includes programming a first selection for a hot button for a first zone in step 450. In step 452, a second selection is programmed for the hot button for a second zone. In step 454, a controller controls the first zone. As mentioned above, various types of controls and applications may be used.

In step 456, a status is provided to the interface for the first zone.

In step 458, a first screen display having a first action is generated. The screen display corresponds to an action programmed to the hot button. In step 460, the hot button is used to select the first action.

In step 462, a controller is controlled in a second zone that is different than the first zone. The controller may be the same controller or a separate controller. As mentioned above, the controller may be used to control various types of functions.

In step 464, a second screen display is generated corresponding to a second action. The second action is an action that may be performed by pressing the hot button. In step 465, the second action is selected by selecting or actuating the hot button.

When switching from the first action to the second action, the controller enters a second zone. The second zone may be a result of selecting a hot button or the controller controlling a function to completion. The first zone transition to the second zone may be accomplished automatically or by a user action.

The control system may control various functions and, thus, more than two actions and zones may be present in any system. The teachings above may thus be extended to various numbers of actions and various numbers of zones.

When describing elements or features of the present disclosure or embodiments thereof, the articles "a", "an", "the", and "said" are intended to mean that there are one or more of the elements or features. The terms "comprising", "including", and "having" are intended to be inclusive and mean that there may be additional elements or features beyond those specifically described.

It is further to be understood that any processes or steps described herein are not to be construed as necessarily requiring their performance in the particular order discussed or illustrated. It is also to be understood that additional or alternative processes or steps may be employed.

## Claims

1. An interface for a controller (50) comprising:
a plurality of manual user input mechanisms (106, 108, 110, 112) for receiving user input,
a processor (404),
a memory (406; 420),
an actuation mechanism (104) configured for receiving an actuation by a user; and
a user interface (100) module coupled to the actuation mechanism for receiving an indication of an actuation of the actuation mechanism by the user, wherein the user interface (100) module is configured in a learn mode to present a list of available actions on a display (114) and receive user selection input of one or more of the displayed available actions from one or more of the manual user input mechanisms, and a soft key module (116) to store selected actions of the available actions, the stored selected actions being associated with the actuation mechanism (104), and in an operation mode the stored selected actions being executed in response to receiving the actuation indication from the actuation mechanism, **characterised in that**
the actuation mechanism comprises a hot key (104) or a programmable function key and **in that**
the interface module (100) is configured to receive a user defined sequence of actions during the learn mode, and to execute the sequence of actions during operation by the execution of a single controller hot key or programmable function key.

2. The interface of claim 1 wherein the selected actions are selected from the group consisting of, changing a controller profile, changing a configuration, changing a type of controlled device (66A, 66B, 66C), traversing a menu state logic, change the state of the controller (50), changing a type of sensing device, changing à controller mode, defining or changing a routine, process, or program, performing a mathematical operation, starting or stopping a clock, automatic tuning, retrieving data, storing data, starting, pausing, restarting, turning off, shutting down, reconfiguring, establishing or entering a user identification or password, and locking.

3. The interface of claim 1 wherein the user interface (100) includes a process controller interface, a temperature controller interface, a power controller interface, a flow controller interface, a pressure controller interface, a movement controller interface, a limit controller interface, a level controller interface, or a velocity controller interface.

4. The interface of claim 1, further comprising a plurality of predefined processes stored in the memory (406; 420) with each having a set of predefined parameters associated therewith, wherein the available actions includes one or more of the predefined processes.

5. The interface of claim 1, further comprising a usage module configured for storing one or more user inputs received from the manual user input mechanisms and including those stored received user inputs on the presented list of available actions.

## Patentansprüche

1. Schnittstelle für eine Steuerung (50), aufweisend:
eine Vielzahl von Mechanismen (106, 108, 110, 112) für die manuelle Benutzereingabe zum Empfangen von Benutzereingaben,
einen Prozessor (404),
einen Speicher (406; 420),
einen Betätigungsmechanismus (104), der ausgestaltet ist, eine Betätigung durch einen Benutzer zu empfangen; und
ein Benutzerschnittstellenmodul (100), das an den Betätigungsmechanismus zum Empfangen einer Anzeige einer Betätigung des Betätigungsmechanismus durch den Benutzer gekoppelt ist, wobei das Benutzerschnittstellenmodul (100) ausgestaltet ist, in einem Lernmodus eine Liste verfügbarer Aktionen auf einer Anzeige (114) darzustellen und Auswahleingaben des Benutzers einer oder mehr der angezeigten verfügbaren Aktionen von einem oder mehr der Mechanismen für die manuelle Benutzereingabe zu empfangen, und ein programmierbares Tastenmodul (116) zum Speichern ausgewählter Aktionen der verfügbaren Aktionen, wobei die ausgewählten Aktionen mit dem Betätigungsmechanismus (104) verknüpft sind und in einem Betriebsmodus die gespeicherten ausgewählten Aktionen als Reaktion auf das Empfangen der Betätigungsanzeige von dem Betätigungsmechanismus ausgeführt werden, **dadurch gekennzeichnet, dass**
der Betätigungsmechanismus eine Schnellstarttaste (104) oder eine programmierbare Funktionstaste aufweist, und dadurch, dass
das Schnittstellenmodul (100) ausgestaltet ist, während des Lernmodus eine vom Benutzer festgelegte Folge von Aktionen zu empfangen und während des Betriebs die Folge von Aktionen durch die Betätigung einer einzelnen Schnellstarttaste oder programmierbaren Funktionstaste der Steuerung auszuführen.

2. Schnittstelle nach Anspruch 1, wobei die ausgewählten Aktionen aus der Gruppe ausgewählt werden, die aus dem Ändern des Steuerungsprofils, Ändern einer Konfiguration, Ändern einer Art eines gesteuerten Geräts (66A, 66B, 66C), Durchlaufen einer Menüzustandslogik, Ändern des Zustandes der Steuerung (50), Ändern einer Art einer Abfühlvorrichtung, Ändern eines Steuerungsmodus, Festlegen oder Ändern einer Routine, eines Prozesses oder Programms, Durchführen einer mathematischen Operation, Starten oder Stoppen einer Uhr, automatisches Abstimmen, Abrufen von Daten, Speichern von Daten, Starten, Unterbrechen, Neustarten, Abschalten, Stillsetzen, Neukonfigurieren, Einrichten oder Eingeben einer Benutzerkennung oder eines Benutzerpassworts und Sperren besteht.

3. Schnittstelle nach Anspruch 1, wobei die Benutzerschnittstelle (100) eine Prozesssteuerungsschnittstelle, eine Temperaturregelungsschnittstelle, eine Leistungsregelungsschnittstelle, eine Strömungsregelungsschnittstelle, eine Druckregelungsschnittstelle, eine Bewegungssteuerungsschnittstelle, eine Grenzwertregelungsschnittstelle, eine Niveauregelungsschnittstelle oder eine Geschwindigkeitsregelungsschnittstelle besitzt.

4. Schnittstelle nach Anspruch 1, ferner eine Vielzahl von im Speicher (406; 420) gespeicherten, vordefinierten Prozessen aufweisend, von denen jeder eine Reihe vordefinierter, mit ihnen verknüpfter Parameter aufweist, wobei zu den verfügbaren Aktionen eine oder mehr der vordefinierten Prozesse gehören.

5. Schnittstelle nach Anspruch 1, ferner ein Nutzungsmodul aufweisend, das für das Speichern einer oder mehr Benutzereingaben, die von den Mechanismen für die manuelle Benutzereingabe empfangen wurden, und für das Aufnehmen jener gespeicherten, empfangenen Benutzereingaben in die dargestellte Liste verfügbarer Aktionen ausgestaltet ist.

## Revendications

1. Interface d'un contrôleur (50) comprenant:
une pluralité de mécanismes de saisie manuelle utilisateur (106, 108, 110, 112) pour recevoir la saisie utilisateur, un processeur (404),
une mémoire (406; 420),
un mécanisme d'activation (104) configuré pour recevoir une activation par un utilisateur; et
un module d'interface utilisateur (100) couplé au mécanisme d'activation pour recevoir une indication d'une activation du mécanisme d'activation par l'utilisateur, dans lequel le module d'interface utilisateur (100) est configuré en mode apprentissage pour présenter une liste d'actions disponibles sur un affichage (114) et recevoir la saisie de la sélection utilisateur d'une ou plusieurs des actions disponibles affichées à partir d'un ou de plusieurs des mécanismes de saisie manuelle utilisateur, et un module de touche programmable (116) pour stocker les actions sélectionnées parmi les actions disponibles, les actions sélectionnées stockées étant associées avec le mécanisme d'activation (104), et en mode fonctionnement les actions sélectionnées stockées étant exécutées en réponse à la réception de l'indication d'activation provenant du mécanisme d'activation, **caractérisé en ce que**
le mécanisme d'activation comprend une touche directe (104) ou une touche de fonction programmable et **en ce que** le module d'interface (100) est configuré pour recevoir une séquence d'actions définie par l'utilisateur pendant le mode apprentissage, et pour exécuter la séquence d'actions pendant le fonctionnement par l'exécution d'un seule touche directe du contrôleur ou de la touche de fonction programmable.

2. Interface selon la revendication 1, dans laquelle les actions sélectionnées sont sélectionnées dans le groupe consistant en changement d'un profil contrôleur, changement d'une configuration, changement d'un type de dispositif contrôlé (66A, 66B, 66C), déplacement d'une logique d'état de menu, changement de l'état du contrôleur (50), changement d'un type de capteur, changement d'un mode contrôleur, définition ou changement d'un programme, procédé ou programme, réalisation d'une opération mathématique, démarrage ou arrêt d'une horloge, accord automatique, extraction de données, stockage de données, démarrage, arrêt momentané, redémarrage, arrêt, arrêt complet, reconfiguration, établissement ou saisie d'une identification ou d'un mot de passe utilisateur et verrouillage.

3. Interface selon la revendication 1, dans laquelle l'interface utilisateur (100) inclut une interface de contrôleur de procédé, une interface de contrôleur de température, une interface de contrôleur de puissance, une interface de contrôleur de flux, une interface de contrôleur de pression, une interface contrôleur de mouvement, une interface de contrôleur de limite, une interface de contrôleur de niveau ou une interface de contrôleur de vitesse.

4. Interface selon la revendication 1, comprenant en outre une pluralité de procédés prédéfinis stockés dans la mémoire (406; 420), chacun ayant un jeu de paramètres prédéfinis qui lui sont associés, dans laquelle les actions disponibles incluent un ou plusieurs des procédés prédéfinis.

5. Interface selon la revendication 1, comprenant en outre un module d'utilisation configuré pour stocker une ou plusieurs entrées utilisateur reçues des mécanismes manuels de saisie utilisateur et incluant les entrées utilisateur reçues et stockées sur la liste présentée des actions disponibles.
